# FASCICULE DE BREVET EUROPEEN

(11) **EP 2 917 048 B1**
(45) Date de publication et mention de la délivrance du brevet: **30.11.2016**
(21) Numéro de dépôt: 13783286.1
(22) Date de dépôt: 18.10.2013
(51) Int. Cl.: B60C 13/00

(54) **MARQUAGES DE FLANC DE PNEU REDUISANT LA TRAINEE AERODYNAMIQUE**
REIFENSEITENWANDMARKIERUNGEN ZUR REDUZIERUNG EINES AERODYNAMISCHEN ZUGS
TYRE SIDEWALL MARKINGS REDUCING AERODYNAMIC DRAG

(30) Priorité: 09.11.2012 FR 1260663
(43) Date de publication de la demande: 16.09.2015
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: BERGER, Eric, F-63040 Clermont-Ferrand Cedex9 (FR); GARDARIN, Benoit, F-63040 Clermont-Ferrand Cedex9 (FR); GUIMARD, Bruno, F-63040 Clermont-Ferrand Cedex9 (FR); MUHLHOFF, Olivier, F-63040 Clermont-Ferrand Cedex9 (FR)
(74) Mandataire: Diernaz, Christian
(86) Numéro de dépôt international: PCT/EP2013/071885
(87) Numéro de publication internationale: WO 2014/072161

(56) Documents cités:
- WO-A1-2009/037952

## Description

### DOMAINE DE L'INVENTION

La présente invention concerne une amélioration du marquage des pneus leur conférant de meilleures performances aérodynamiques en roulage comparativement à des pneus usuels.

### ÉTAT DE LA TECHNIQUE

Il a été établi le rôle important joués par les pneus équipant un véhicule de tourisme dans la consommation énergétique notamment par les pertes énergétiques liées aux déformations cycliques auxquelles sont soumis les pneus.

Des gains substantiels ont été obtenus par l'emploi dans la construction des pneus de matériaux ayant des caractéristiques appropriées.

La présente invention explore une autre voie résultant d'observations expérimentales effectuées en soufflerie sur des pneus en roulage.

Un pneu comprend usuellement une partie de sommet pourvue sur l'extérieur d'une bande de roulement destinée à venir en contact avec une chaussée lors du roulage. Cette partie de sommet se prolonge latéralement par des flancs se terminant par des bourrelets destinés à être en contact avec des parties de jante.

Les flancs des pneus présentent en général une souplesse appropriée pour permettre une flexion aisée lors du passage dans le contact avec la chaussée lors d'un roulage. La paroi interne des flancs est en contact avec l'air de gonflage du pneu tandis que la paroi externe des flancs est en contact avec l'air extérieur dans lequel évoluent le véhicule et les pneus du véhicule.

Différents essais en soufflerie ont été réalisés et ont permis aux demanderesses de faire le constat de la part significative dans la perte énergétique liée aux effets aérodynamiques (notamment de trainée) des pneus de l'essieu avant d'un véhicule et cela à plusieurs vitesses de roulage à partir de 80 km/h et jusqu'à 220 km/h.

Dans une soufflerie, on dispose un dispositif pouvant entraîner à une vitesse déterminée les pneus d'un véhicule, ces pneu étant gonflés et écrasés à ses conditions d'usage du véhicule. De ces tests et mesures, il a été constaté que les flancs des pneus avant et plus spécifiquement les flancs situés coté extérieur au véhicule occasionnaient une perte énergétique (trainée aérodynamique), cette perte provoquant une augmentation du coefficient Cx et par là une augmentation de la consommation du véhicule en usage.

Une partie de ces pertes énergétiques semble reliée à la présence de marquages (lettres, chiffres, logo, ...) formés en relief sur les flancs des pneus. Un marquage est dit « en relief » dans la présente demande dès lors qu'il fait projection vers l'extérieur du flanc. Par opposition un marquage en creux est formé dans l'épaisseur du flanc et ne présente donc aucune aspérité sur ledit flanc.

De façon réglementaire, les pneus destinés à être commercialisés doivent comporter sur leurs flancs un certain nombre de marquages indiquant notamment la dimension du pneu, les mentions de fabrication (pays, date) ainsi que diverses autres informations utiles. D'autres informations figurent sur les flancs : les marques des pneus ainsi que les logos du manufacturier sont moulés afin de permettre au client de connaître l'origine des pneus qu'il utilise. En général, toutes ces informations sont moulées lors du moulage et de la vulcanisation du pneu par le manufacturier.

On distingue sur chaque flanc une première partie de flanc et une seconde partie de flanc. La première partie de flanc est située radialement à l'extérieur des points axialement les plus éloignés du plan équatorial lorsque le pneu est monté sur sa jante de montage et gonflé à sa pression d'usage. La seconde partie est située dans le prolongement de la première partie et est située radialement à l'intérieur de cette première partie. Cette seconde partie est reliée à un bourrelet du pneu.

Lors des essais de soufflerie, il a été constaté que les marquages - indispensables pour pouvoir mettre sur le marché les pneus - n'étaient pas sans effet sur la trainée aérodynamique d'autant que ces marquages étaient situés dans la première partie (c'est-à-dire la partie du flanc radialement la plus à l'extérieur).

Pour point de repère d'une performance à atteindre, il a été mesuré la performance de pneus lisses, c'est-à-dire de pneus dont les flancs étaient entièrement dépourvus de tout marquage en relief.

### Définitions :

Plan médian équatorial : c'est un plan perpendiculaire à l'axe de rotation et passant par les points du pneu radialement les plus éloignés dudit axe.

Par direction radiale, on entend dans le présent document une direction qui est perpendiculaire à l'axe de rotation du pneu (cette direction correspond à la direction de l'épaisseur de la bande de roulement).

Par direction transversale ou axiale, on entend une direction parallèle à l'axe de rotation du pneu.

Par direction circonférentielle, on entend une direction qui est tangente à tout cercle centré sur l'axe de rotation. Cette direction est perpendiculaire à la fois à la direction axiale et à une direction radiale.

Par axialement vers l'extérieur, on entend une direction qui est orientée vers l'extérieur de la cavité interne du pneu.

Les conditions usuelles de roulage du pneu ou conditions d'utilisation indiquées dans le présent document sont celles qui sont définies par la norme E.T.R.T.O. ; ces conditions d'utilisation précisent la pression de gonflage de référence correspondant à la capacité de charge du pneu indiquée par son indice de charge et son code vitesse. Ces conditions d'utilisation peuvent aussi être dites "conditions nominales" ou "conditions d'usage".

Le document WO 2009/037952 A1 montre un pneu comprenant les caractéristiques du préambule de la revendication 1.

### BREF EXPOSÉ DE L'INVENTION

La présente invention vise à approcher voire à atteindre, la performance en trainée aérodynamique de pneus pourvus de flancs lisses, avec des pneus pourvus de marquages en relief sur leurs flancs.

À cet effet, l'invention a pour objet un pneu destiné à l'équipement de véhicule de tourisme, ce pneu comprenant une partie de sommet pourvue sur son extérieur d'une bande de roulement destinée à venir en contact avec une chaussée lors du roulage, cette partie de sommet se prolongeant latéralement par des flancs se terminant par des bourrelets destinés à être en contact avec des parties de jante sur laquelle est monté le pneu.

Chaque flanc comprend une paroi interne en contact avec l'air de gonflage du pneu et une paroi externe en contact avec l'air extérieur.

Selon l'invention, l'un au moins des flancs comprend une pluralité de premiers secteurs et de seconds secteurs, ces premiers et seconds secteurs étant formés sur la paroi externe de sa première partie de flanc située entre les points axialement les plus à l'extérieur lorsque ce pneu est monté sur sa jante de montage et gonflé à sa pression d'usage et la partie de sommet.

Les premiers secteurs sont totalement dépourvus de marquages en relief (c'est-à-dire de motif en relief d'une hauteur supérieure à 0.2 mm) tandis que les seconds secteurs sont pourvus de marquages en relief, ces marquages en relief ayant une hauteur au moins égale à 0.2 mm. En outre, les premiers secteurs dépourvus de marquages font chacun un angle au moins égal à 20°, et la somme des angles desdits premiers secteurs est au moins égale à 120 °.

De manière inattendue, il a été vérifié que la performance de trainée aérodynamique d'un pneu dont les flancs sont lisses (c'est-à-dire dépourvus de marquage en relief d'une hauteur au moins égale à 0.2 mm) peut être atteinte par un pneu comportant néanmoins des marquages en relief - donc particulièrement lisibles pour un observateur. De manière équivalente, une absence de marquage en relief d'une hauteur au plus égale à 0.2 mm doit dans le présent document s'entendre comme un flanc ayant une rugosité de surface au plus égale à 0.2 mm.

Dans une variante préférentielle, les premiers secteurs peuvent être pourvus de marquages en creux (par opposition aux marquages en relief, les marquages en creux ne forment aucune aspérité en relief sur le flanc). Ces marquages en creux ont une profondeur au plus égale à 1.5 mm et préférentiellement comprise entre au moins 0.5 mm et au plus 0.8 mm.

Avantageusement, les marquages en relief ont une hauteur au plus égale à 1.5 mm et encore plus préférentiellement comprise entre 0.5 et 0.8 mm. Ceci s'applique d'autant que l'épaisseur moyenne des flancs de pneu TC sont relativement faible c'est-à-dire inférieure à 3 mm, ce qui permet de réduire les pertes hystérétiques des flancs.

Encore plus avantageusement, le profil méridien de la paroi externe du flanc, au moins dans la première partie du flanc dans le prolongement de la bande de roulement) considéré est substantiellement continu, c'est-à-dire qu'il ne présente pas de discontinuité de pente. Par profil méridien, on entend le profil de la paroi externe du flanc vu dans un plan de coupe quelconque contenant l'axe de rotation du pneu.

Les demanderesses ayant observé que seul le flanc destiné à être à l'extérieur du véhicule a une incidence sur la trainée aérodynamique, il est judicieux de former sur ce flanc une marque spécifique destinée à positionner ce flanc à l'extérieur, ce flanc comprenant une répartition des marquages selon la présente invention.

Bien entendu, si le pneu comporte un sens préférentiel de roulage, ce pneu est préférentiellement réalisé avec ses deux flancs selon l'invention pour pouvoir être monté soit en position droite soit en position gauche sur un même essieu.

Si le pneu ne comporte pas de sens préférentiel de roulage, il est judicieux de former au moins sur le flanc destiné à être à l'extérieur le marquage selon l'invention.

D'autres caractéristiques et avantages de l'invention ressortent de la description faite ci-après en référence aux dessins annexés qui montrent, à titre d'exemple non limitatif, une forme de réalisation de l'objet de l'invention.

### BRÈVE DESCRIPTION DES FIGURES

La figure 1 représente une vue en coupe d'un pneu selon l'invention ;
La figure 2 représente une vue d'un flanc du pneu de la figure 1.

### DESCRIPTIONDES FIGURES

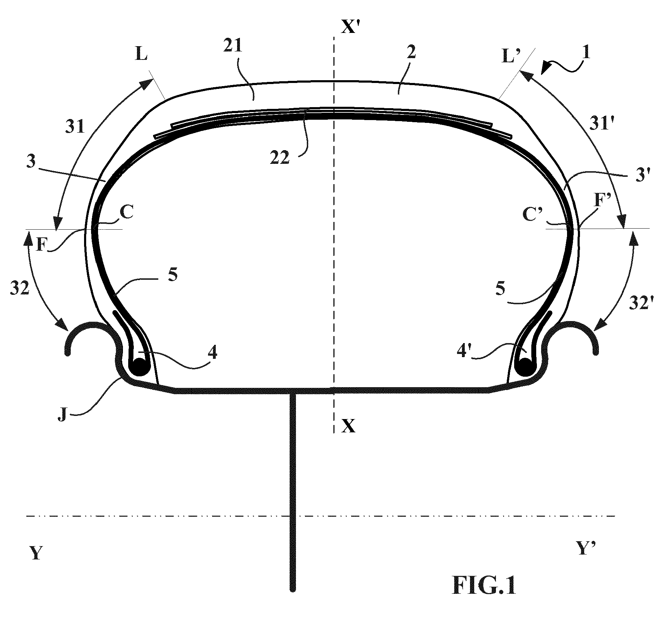

La figure 1 représente une vue en coupe d'un pneu 1 de véhicule de tourisme selon l'invention monté sur une jante de montage J. Ce pneu de dimension 205/55 R 16 comprend une partie de sommet 2 pourvue radialement à l'extérieur d'une bande de roulement 21 destinée à venir en contact avec une chaussée lors du roulage. Cette partie de sommet 2 est renforcée par une armature de renforcement 22 et se prolonge latéralement par des flancs 3, 3' se terminant par des bourrelets 4, 4' assurant le contact avec la jante J. Le pneu 1 comporte une armature de carcasse 5 s'étendant d'un bourrelet à l'autre en passant par les flancs 3, 3'.

Chaque flanc 3 et 3' comprend une paroi interne en contact avec le gaz de gonflage du pneu et une paroi externe sur laquelle sont formés des marquages visibles par l'utilisateur.

Dans la configuration représentée, le pneu est gonflé à sa pression d'utilisation et il adopte un profil à l'équilibre. Dans cette configuration, l'armature de carcasse passe, respectivement dans les flancs 3 et 3', par des points C, C' axialement les plus à l'extérieur par rapport au plan médian équatorial XX'. Ces points C etC' déterminent des points F et F' respectivement sur les parois externes des flancs 3 et 3'. Ces points F et F' sont obtenus comme l'intersection d'une droite parallèle à l'axe de rotation YY' et passant par chacun des points C et C' avec la paroi externe de chaque flanc.

Des points L et L' sont repérés sur la coupe méridienne de la figure 1 : ces points L et L' correspondent aux limites latérales de contact de la bande de roulement avec un sol lorsque le pneu gonflé à sa pression d'usage est soumis à sa charge d'usage.

Chaque flanc 3 (respectivement 3') est divisé en une première partie 31 (respectivement 31') et une seconde partie 32 (respectivement 32'). La première partie 31 s'étendant entre le point F et le point L, la seconde partie 32 prolongeant la première partie 31 vers le bourrelet 4.

Le pneu selon l'invention est tel que les marquages réalisés par moulage qui sont formés dans les premières parties 31 et 31' respectent la règle suivante :
- sur chaque flanc 3, 3', il est formé trois premiers secteurs 311 et trois seconds secteurs 312, ces premiers et seconds secteurs étant formés sur la paroi externe de sa première partie de flanc 31 ;
- les premiers secteurs 311 sont totalement dépourvus de marquages en relief, c'est-à-dire de motif en relief d'une hauteur supérieure à 0.2 mm et de toute rugosité de hauteur supérieure à 0.2 mm ;
- les seconds secteurs 312 sont pourvus de marquages en relief 3120, ces marquages en relief ayant une hauteur égale en moyenne à 0.6 mm.

En outre, les premiers secteurs 311 dépourvus de marquages font chacun un angle sensiblement égal à 90°, et la somme des angles desdits premiers secteurs est égale à 270 °. Les seconds secteurs font des angles sensiblement égaux à 30°.

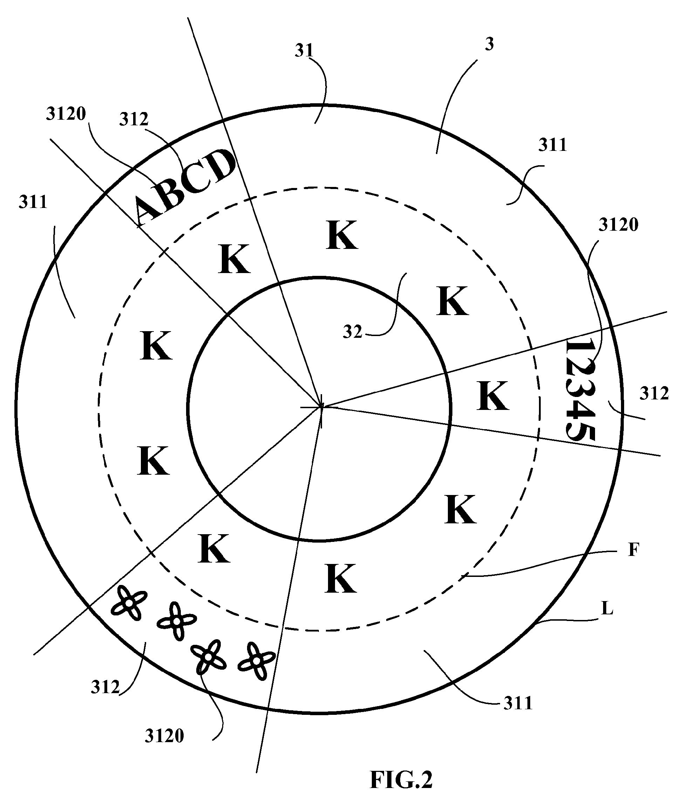

La détermination de chaque secteur se fait en traçant deux plans contenant l'axe de rotation du pneu et venant encadrer au plus près les limites de chaque marquage comme cela est visible sur la figure 2.

Sur cette figure 2 on a représenté une vue de l'un des flancs du pneu de la figure 1. Sur ce flanc 3, on distingue sur la première partie de flanc 31, cette première partie de flanc 31 étant comprise entre un cercle passant par les points F et un cercle passant par les points L, trois premiers secteurs 311 dépourvus de tout marquage.

En outre, trois seconds secteurs 312 comportent des marquages en relief 3120 sur la surface de paroi de la première partie de flanc. La hauteur des marquages en relief 3120 est en moyenne égale dans le cas présent à 0.6 mm. Les premiers secteurs et les seconds secteurs sont placés en alternance.

Sur les secondes parties de flanc 32, des marquages réglementaires, représentés ici avec des lettres **K** sont formés en relief d'une hauteur égale à 1.0 mm ; ces marquages réglementaires ne présentent pas d'incidence significative sur la trainée aérodynamique comme cela a pu être vérifié lors d'essais en soufflerie.

Les premiers secteurs dépourvus de marquages font chacun un angle sensiblement égal à 90°. Les seconds secteurs font des angles sensiblement égaux à 30°.

Il est à noter que les premiers secteurs peuvent être pourvus de marquages en creux d'une profondeur au plus égale à 1.5 mm sans que cela modifie significativement la trainée aérodynamique du pneu.

Par ailleurs, les reliefs de matière formés au moment du moulage dans les orifices d'éventation formés sur le moule du pneu, compte tenu de leur caractère très limité en nombre, ne sauraient être considérés comme des marquages générant une part significative de trainée aérodynamique. Bien entendu, leur suppression est souhaitable.

L'invention qui a décrite au moyen d'un exemple n'est pas limitée à l'exemple décrit et représenté et diverses modifications peuvent y être apportées sans sortir du cadre tel que défini par les revendications. Il est possible notamment de réaliser des marquages sur les premiers secteurs de flanc par apposition d'autocollants ou « stickers» de couleur appropriée et d'épaisseur au plus égale à 0.2 mm.

## Revendications

1. Pneu (1) destiné à l'équipement de véhicule de tourisme, ce pneu comprenant une partie de sommet (2) pourvue sur son extérieur d'une bande de roulement destinée à venir en contact avec une chaussée lors du roulage, cette partie de sommet (2) se prolongeant latéralement par des flancs (3, 3') se terminant par des bourrelets (4, 4') destinés à être en contact avec des parties de jante (J) sur laquelle est monté le pneu, chaque flanc (3, 3') comprenant une paroi interne en contact avec l'air de gonflage du pneu et une paroi externe en contact avec l'air extérieur, l'un au moins des flancs comprend une pluralité de premiers secteurs (311) et de seconds secteurs (312), ces premiers et seconds secteurs étant formés sur la paroi externe d'une première partie de flanc (31) située entre les points (F) axialement les plus à l'extérieur lorsque ce pneu est monté sur sa jante de montage et gonflé à sa pression d'usage et la partie de sommet (2), ce pneu étant **caractérisé en ce que** les premiers secteurs (311) sont totalement dépourvus de marquages en relief, c'est-à-dire de motif en relief d'une hauteur supérieure à 0.2 mm, tandis que les seconds secteurs (312) sont pourvus de marquages en relief (3120), ces marquages en relief ayant une hauteur au moins égale à 0.2 mm, et **en ce que** les premiers secteurs (311) dépourvus de marquages font chacun un angle au moins égal à 20°, et **en ce que** la somme des angles desdits premiers secteurs est au moins égale à 120 °.

2. Pneu selon la revendication 1 **caractérisé en ce que** les premiers secteurs (311) sont pourvus de marquages en creux, ces marquages en creux ayant une profondeur au plus égale à 1.5 mm.

3. Pneu selon la revendication 2 **caractérisé en ce que** les marquages en creux des premiers secteurs (311) ont une profondeur comprise entre au moins 0.5 mm et au plus 0.8 mm.

4. Pneu selon l'une des revendications 1 à 3 **caractérisé en ce que** les marquages en relief des seconds secteurs (312) ont une hauteur au plus égale à 1.5 mm.

5. Pneu selon la revendication 4 **caractérisé en ce que** les marquages en relief des seconds secteurs (312) ont une hauteur comprise entre 0.5 mm et 0.8 mm.

6. Pneu selon l'une quelconque des revendications 1 à 5 **caractérisé en ce que** le profil méridien de la paroi externe du flanc, au moins dans la première partie du flanc (31) est substantiellement continu, c'est-à-dire qu'il ne présente pas de discontinuité de pente.

7. Pneu selon l'une quelconque des revendications 1 à 6 **caractérisé en ce que** le flanc pourvu de premiers secteurs (311) dépourvus de marquages d'une hauteur supérieure à 0.2 mm et de seconds secteurs (312) pourvus de marquages en relief (3120), ce flanc étant destiné à être à l'extérieur du véhicule comprend une marque spécifique destinée à positionner ce flanc à l'extérieur du véhicule.

## Patentansprüche

1. Reifen (1), der zur Ausrüstung eines Personenkraftwagens bestimmt ist, wobei dieser Reifen einen Scheitelteil (2) umfasst, der an seiner Außenseite mit einem Laufstreifen versehen ist, der dazu bestimmt ist, beim Fahren mit einer Fahrbahn in Kontakt zu kommen, wobei dieser Scheitelteil (2) sich seitlich durch Flanken (3, 3') verlängert, welche durch Wulste (4, 4') enden, die dazu bestimmt sind, mit Teilen einer Felge (J), an der der Reifen montiert ist, in Kontakt zu kommen, wobei jede Flanke (3, 3') eine Innenwand, die mit der Aufpumpluft des Reifens in Kontakt ist, und eine Außenwand, die mit der Außenluft in Kontakt ist, umfasst, wobei mindestens eine der Flanken eine Mehrzahl von ersten Sektoren (311) und zweiten Sektoren (312) umfasst, wobei diese ersten und zweiten Sektoren an der Außenwand eines ersten Flankenteils (31) gebildet sind, der sich zwischen den axial am weitesten außen befindlichen Punkten (F), wenn dieser Reifen an seiner Montagefelge montiert ist und mit seinem Nutzdruck aufgepumpt ist, und dem Scheitelteil (2) befindet, wobei dieser Reifen **dadurch gekennzeichnet ist, dass** die ersten Sektoren (311) völlig frei von erhabenen Markierungen, das heißt von erhabenen Motiven mit einer Höhe über 0,2 mm, sind, während die zweiten Sektoren (312) mit erhabenen Markierungen (3120) versehen sind, wobei diese erhabenen Markierungen eine Höhe von mindestens gleich 0,2 mm haben, und dass die ersten Sektoren (311), die keine Markierungen aufweisen, jeweils einen Winkel von mindestens gleich 20° bilden, und dass die Summe der Winkel der genannten ersten Sektoren mindestens gleich 120° ist.

2. Reifen nach Anspruch 1, **dadurch gekennzeichnet, dass** die ersten Sektoren (311) mit vertieften Markierungen versehen sind, wobei diese vertieften Markierungen eine Tiefe von höchstens gleich 1,5 mm haben.

3. Reifen nach Anspruch 2, **dadurch gekennzeichnet, dass** die vertieften Markierungen der ersten Sektoren (311) eine Tiefe zwischen mindestens 0,5 mm und höchstens 0,8 mm haben.

4. Reifen nach einem der Ansprüche 1 bis 3, **dadurch gekennzeichnet, dass** die erhabenen Markierungen der zweiten Sektoren (312) eine Höhe von höchstens gleich 1,5 mm haben.

5. Reifen nach Anspruch 4, **dadurch gekennzeichnet, dass** die erhabenen Markierungen der zweiten Sektoren (312) eine Höhe zwischen 0,5 mm und 0,8 mm haben.

6. Reifen nach einem der Ansprüche 1 bis 5, **dadurch gekennzeichnet, dass** das Meridianprofil der Außenwand der Flanke, mindestens im ersten Flankenteil (31), im Wesentlichen fortlaufend ist, das heißt, dass es keine Neigungsunterbrechung aufweist.

7. Reifen nach einem der Ansprüche 1 bis 6, **dadurch gekennzeichnet, dass** die Flanke, die mit ersten Sektoren (311), die frei von Markierungen mit einer Höhe über 0,2 mm sind, und zweiten Sektoren (312), die mit erhabenen Markierungen (3120) versehen sind, versehen ist, wobei diese Flanke dazu bestimmt ist, an der Außenseite des Fahrzeugs zu sein, eine spezifische Markierung, die dazu bestimmt ist, diese Flanke an der Außenseite des Fahrzeugs zu positionieren, umfasst.

## Claims

1. Tyre (1) for equipping a passenger vehicle, including a crown portion (2) provided on its exterior with a tread intended to come into contact with a road surface when rolling, this crown portion (2) being extended laterally by sidewalls (3, 3') terminating in beads (4, 4') intended to be in contact with rim parts (J) on which the tyre is mounted, each sidewall (3, 3') including an inner wall in contact with the air inflating the tyre and an outer wall in contact with the external air, at least one of the sidewalls includes a plurality of first sectors (311) and second sectors (312), these first and second sectors being formed on the outer wall of a first sidewall portion (31) located between the crown portion (2) and points (F) that are the axially outermost points when this tyre is mounted on its mounting rim and inflated to its usage pressure, this tyre being **characterised in that** the first sectors (311) are completely without raised markings, i.e. raised markings of a height greater than 0.2 mm, whereas the second sectors (312) are provided with raised markings (3120), these raised markings having a height equal to at least 0.2 mm, and **in that** the first sectors (311) without markings each form an angle equal to at least 20°, and **in that** the sum of the angles of said first sectors is equal to at least 120°.

2. Tyre according to Claim 1 **characterized in that** the first sectors (311) are provided with recessed markings, these recessed markings having a depth equal to at most 1.5 mm.

3. Tyre according to Claim 2 **characterized in that** the recessed markings of the first sectors (311) have a depth between at least 0.5 mm and at most 0.8 mm.

4. Tyre according to any one of Claims 1 to 3, **characterized in that** the raised markings of the second sectors (312) have a height equal to at most 1.5 mm.

5. Tyre according to Claim 4 **characterized in that** the raised markings of the second sectors (312) have a height between 0.5 mm and 0.8 mm.

6. Tyre according to any one of Claims 1 to 5 **characterized in that** the meridian profile of the outer wall of the sidewall is substantially continuous, i.e. features no slope discontinuity, at least in the first portion (31) of the sidewall.

7. Tyre according to any one of Claims 1 to 6, **characterized in that** the sidewall provided with first sectors (311) without markings higher than 0.2 mm and second sectors (312) provided with raised markings (3120), this sidewall being intended to be on the outside of the vehicle, includes a specific mark intended to position this sidewall on the outside of the vehicle.
